# FASCICULE DE BREVET EUROPEEN

(11) **EP 0 692 619 B1**
(45) Date de publication et mention de la délivrance du brevet: **01.09.1999**
(21) Numéro de dépôt: 95401668.9
(22) Date de dépôt: 12.07.1995
(51) Int. Cl.: F02K 1/70

(54) **Inverseur de poussée de turboréacteur à double flux à obstacles externes**
Schubumkehrvorrichtung für ein Zweikreistriebwerk mit externen Klappen
Double flux turbine thrust reverser with external blocker flaps

(30) Priorité: 13.07.1994 FR 9408704
(43) Date de publication de la demande: 17.01.1996
(73) Titulaire: HISPANO-SUIZA AEROSTRUCTURES, 76700 Gonfreville l'Orcher (FR)
(72) Inventeur: Valleroy, Laurent Georges, F-76600 Le Havre (FR)
(74) Mandataire: Berrou, Paul

(56) Documents cités:
- EP-A- 0 315 522
- EP-A- 0 534 815
- FR-A- 2 081 954
- GB-A- 2 142 887
- US-A- 5 058 828

## Description

La présente invention concerne un inverseur de poussée de turboréacteur à double flux.

Dans ce type de turboréacteur comprenant un canal primaire de circulation des gaz dits de flux chaud constituant une veine d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

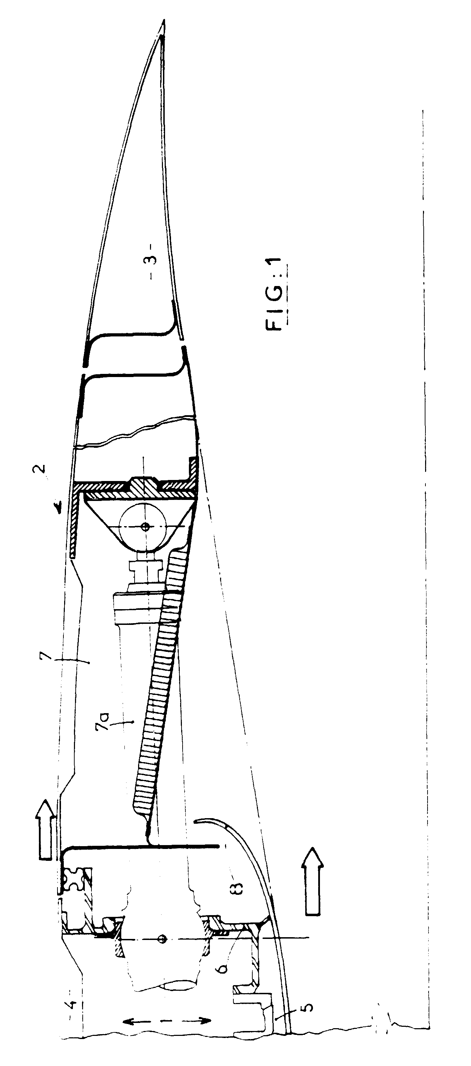

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 prolongé par un bord de déviation 8 et limitant extérieurement la veine du flux secondaire et un cadre avant 6 qui assure la jonction desdits panneaux 4 et 5. Ledit cadre 6 sert également de support au dispositif de commande des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7, formant un ensemble annulaire, éventuellement en coopération avec une partie fixe, selon le mode démontage de l'ensemble de propulsion constitué par le turboréacteur sur l'avion.

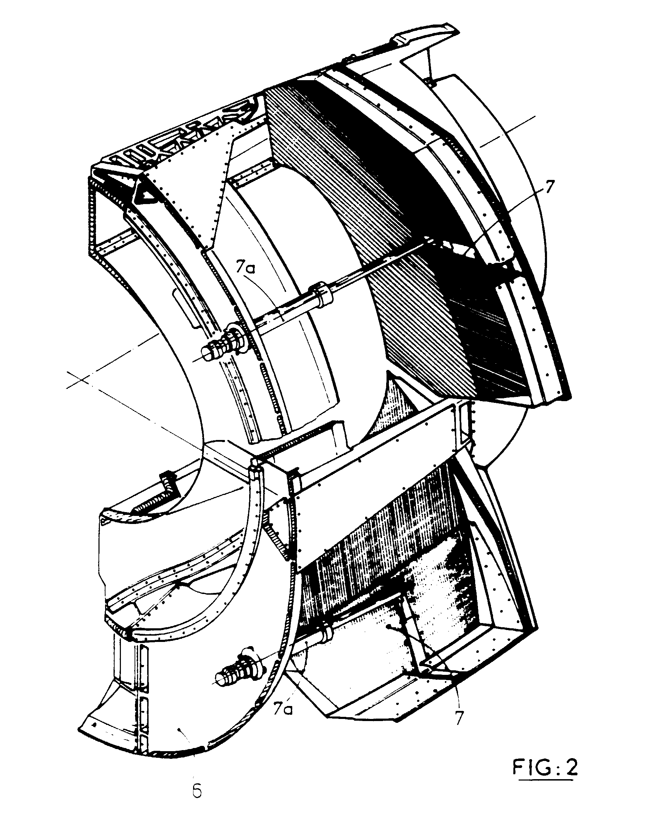

La figure 2 montre, selon une vue schématique partielle en perspective un exemple d'application d'un tel inverseur de poussée à un turboréacteur à double flux, l'inverseur comportant dans ce cas quatre portes 7 dont deux sont visibles sur la figure 2 et sont montrées ouvertes, correspondant à un fonctionnement en inversion de poussée. Chaque porte 7 est associée à un moyen de commande des déplacements tels qu'un vérin 7a.

Des exemples de réalisation de ce type d'inverseur de poussée de turboréacteur à portes basculantes sont décrits notamment par FR-A-2 618 853, FR-A 2 618 852, FR-A 2 621 082, FR-A-2 627 807, FR-A-2 634 251, FR-A-2 638 207 et FR-A-2 651 021 dont est titulaire la demanderesse.

Dans certaines applications, l'installation d'un inverseur de poussée de ce type connu soulève de grandes difficultés et peut conduire pratiquement à une impossibilité. C'est notamment le cas pour des turboréacteurs à très grand taux de dilution, associés lors du montage sur l'avion à une nacelle très courte et à un canal de flux secondaire court correspondant à un fonctionnement dit à flux séparés, pour lesquels l'utilisation de portes proprement dites comme obstacles d'inversion est mal adaptée.

Par ailleurs, EP-A-0 315 522 décrit un inverseur de poussée comportant des obstacles, intégrés en position fermée dans la paroi extérieure du canal annulaire de flux secondaire et constituant en position déployée des obstacles de déviation du flux secondaire. Chaque obstacle comporte une partie amont recouvrant une partie interne d'une structure fixe constituant la paroi extérieure du canal du flux secondaire.

Un inverseur de poussée de turboréacteur permettant de répondre à ces conditions sans encourir les inconvénients des solutions précédemment connues est caractérisé en ce que chaque obstacle est associé à au moins une bielle amont et à au moins une bielle aval, lesdites bielles assurant la fixation et le maintien de l'obstacle ainsi que son guidage lors des déplacements de l'obstacle et au moins une bielle aval relie de manière articulée l'obstacle à la structure fixe interne constituant l'enveloppe du corps primaire du turboréacteur et au moins une bielle latérale amont relie de manière articulée l'obstacle à la partie aval de la structure fixe de nacelle.

Avantageusement, pour certaines applications, ladite partie amont de chaque obstacle est prolongée par une partie aval située, en jet direct, dans le prolongement de ladite structure fixe de manière que la surface intérieure de la partie aval dudit obstacle délimite extérieurement la partie aval du canal du flux secondaire, lors du fonctionnement de l'inverseur en jet direct.

De manière avantageuse, pour d'autres applications, la partie interne de structure fixe recouverte par la totalité de dudit obstacle est prolongée par une partie aval fixe délimitant, d'une part, du côté externe, la surface extérieure de nacelle, dans le prolongement en jet direct de la surface extérieure de l'obstacle et, d'autre part, du côté interne, la surface extérieure de la partie aval du canal de flux secondaire, dans toutes les configuration de fonctionnement, de manière à constituer, en jet direct, un bord de fuite et en jet inversé, un bord de déviation.

D'autres caractéristiques et avantages de l'invention seront mieux compris à la lecture de la description qui va suivre des modes de réalisation de l'invention, en référence aux dessins annexés sur lesquels :
- la figure 1 représente une demi-vue schématique en coupe longitudinale par un plan passant par l'axe de rotation d'un turboréacteur, d'un inverseur de poussée à portes pivotantes, en position fermée, d'un type connu et qui a fait précédemment l'objet d'une description ;
- la figure 2 représente une vue partielle en perspective de l'inverseur de poussée représenté sur la figure 1, en position déployée ;
- la figure 3 montre suivant une vue schématique partielle latérale un exemple d'application d'un inverseur de poussée conforme à l'invention, lors d'un fonctionnement en jet direct;
- la figure 4 montre suivant une demi-vue schématique de l'arrière l'inverseur de poussée représenté sur la figure 3, lors d'un fonctionnement en inversion de poussée ;
- la figure 5 représente suivant une vue schématique analogue à celle de la figure 1 en coupe longitudinale par un plan de symétrie d'une porte passant par l'axe de rotation du turboréacteur, l'inverseur de poussée conforme à l'invention des figures 3 et 4, lors d'un fonctionnement en jet direct sur la demi-vue supérieure et lors d'un fonctionnement en inversion de poussée sur la demi-vue inférieure ;
- la figure 6 représente l'inverseur de poussée des figures 3 et 5 en section par un plan passant par la ligne VI-VI de la demi-vue supérieure de la figure 5 ;
- la figure 7 représente une vue en section par un plan passant par la ligne VII-VII de la figure 6 de l'inverseur de poussée représenté sur les figures 3, 5 et 6 ;
- la figure 8 représente selon une vue en section analogue à celle de la figure 7 l'inverseur de poussée représenté sur les figures 4 et 5 lors d'un fonctionnement en inversion de poussée.
- La figure 9 montre suivant une vue schématique partielle latérale analogue à celle de la figure 3 un second exemple d'application d'un inverseur de poussée conforme à l'invention ;
- La figure 10 représente suivant une vue schématique analogue à celles des figures 1 et 5 en coupe longitudinale par un plan de symétrie d'un obstacle passant par l'axe de rotation du turboréacteur, l'inverseur de poussée de la figure 9, lors d'un fonctionnement en jet direct sur la demi-vue supérieure et lors d'un fonctionnement en inversion de poussée sur la demi-vue inférieure ;
- La figure 11 représente une vue schématique partielle d'un inverseur de poussée suivant une variante de réalisation de l'invention, lors d'un fonctionnement en inversion de poussée ;
- La figure 12 représente selon une vue en section analogue à celle de la figure 8 l'inverseur de poussée représenté sur la figure 11 .

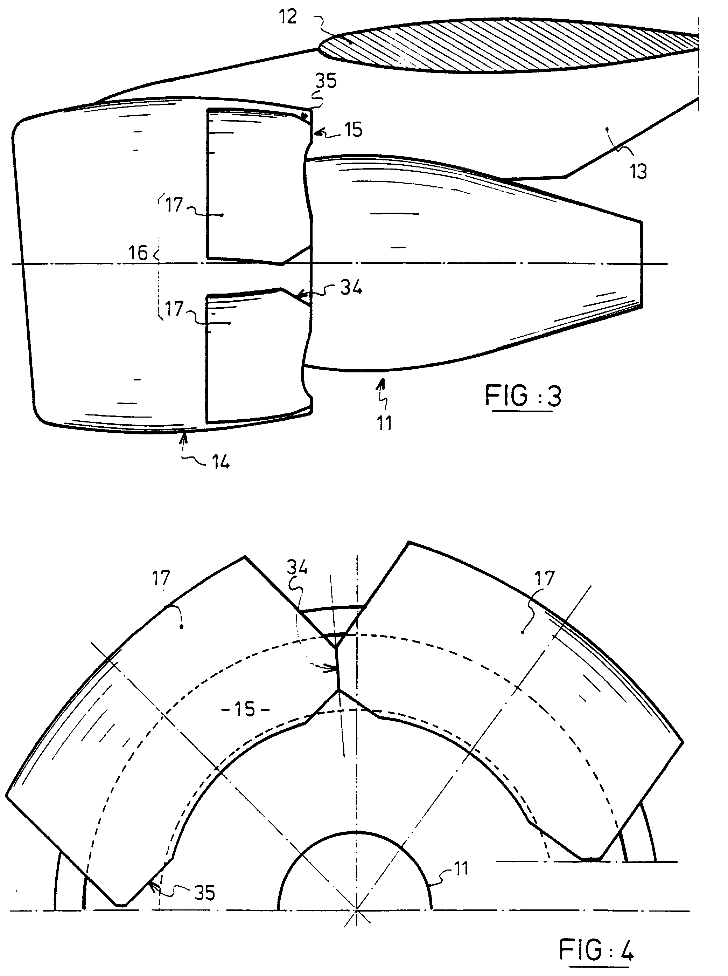

La figure 3 montre une application particulièrement intéressante et avantageuse de l'invention au cas d'un turboréacteur 11 à double flux présentant un grand taux de dilution. Dans l'exemple représenté, le turboréacteur 11 est monté, de manière connue en soi, sous l'aile 12 d'un avion, en position avancée, au moyen d'un pylône ou mât d'avion 13. Ce type de montage est associé à la mise en oeuvre d'une nacelle intégrée 14, enveloppant extérieurement un canal secondaire 15 de circulation du flux secondaire ou flux froid du turboréacteur à double flux, ledit canal intégrant le canal de soufflante du turboréacteur. Dans ce cas, la nacelle 14 est très courte et correspond à un fonctionnement dit à flux séparés.

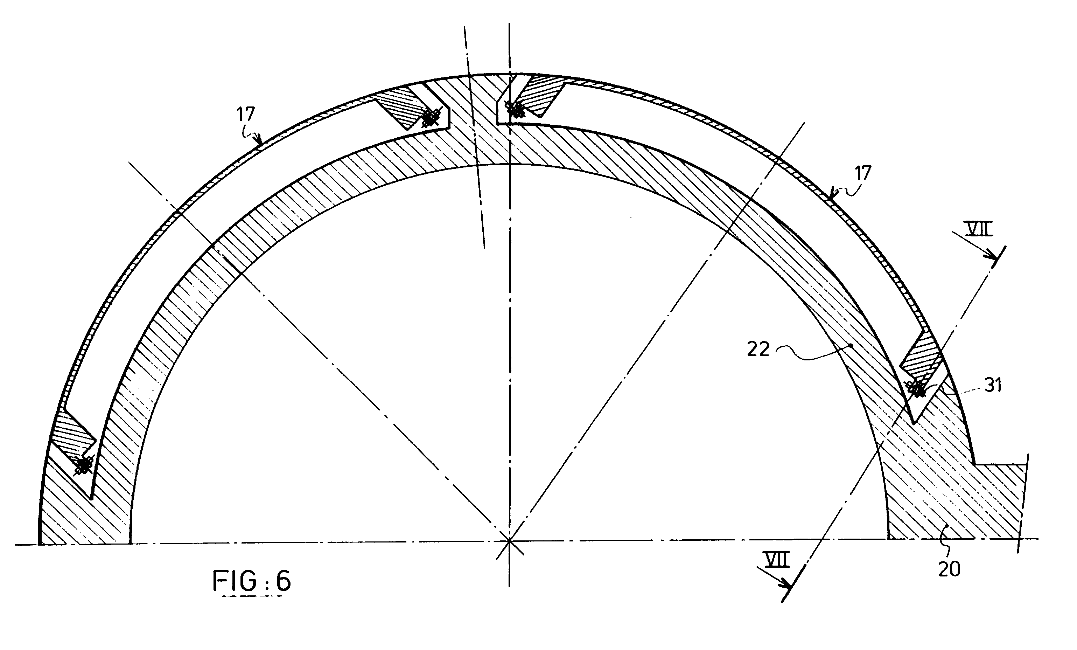

De manière remarquable et conforme à l'invention, ladite nacelle 14 comporte un inverseur de poussée 16 dont la partie mobile est constituée dans l'exemple représenté par quatre éléments déplaçables ou obstacles 17. Ledit inverseur de poussée 16 est représenté plus en détails sur les figures 4 à 8. Sur la figure 3, les obstacles 17 sont dans la position fermée, correspondant au fonctionnement en jet direct et sur la figure 4, les obstacles 17 sont dans la position déployée, correspondant au fonctionnement en inversion de poussée, durant lequel le flux secondaire est dévié vers l'avant par lesdits obstacles 17, créant ainsi la contre-poussée.

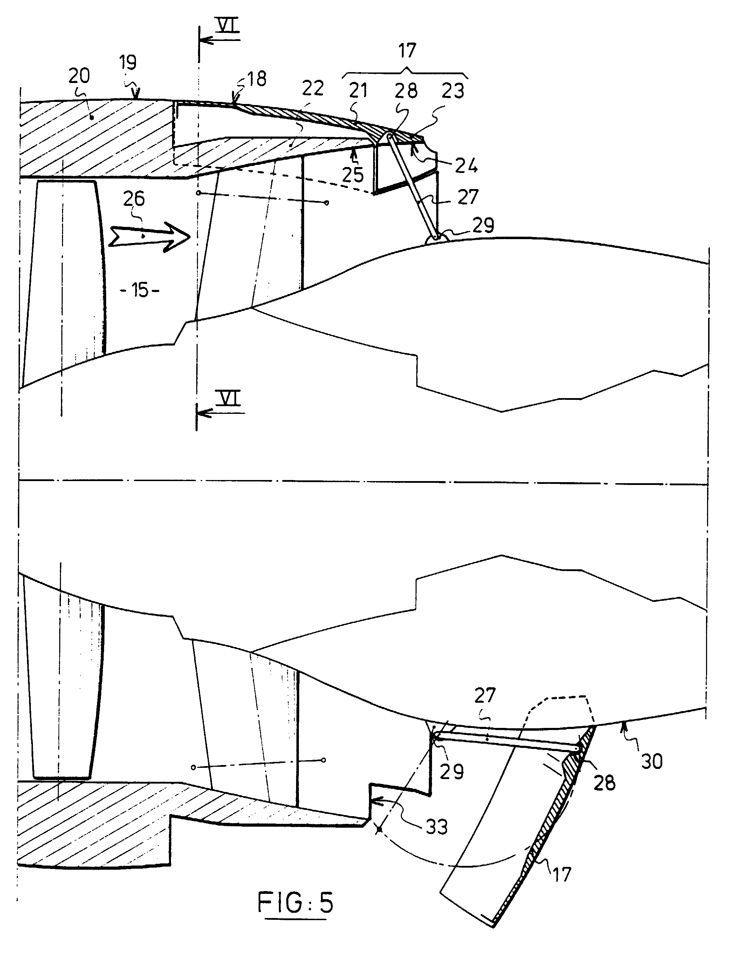

Comme cela apparait sur la figure 3 et sur la demi-vue supérieure de la figure 5, lors du fonctionnement en jet direct, la surface extérieure 18 de chaque obstacle 17 constitue une partie de surface extérieure de nacelle et se trouve dans le prolongement de la surface extérieure 19 de la structure fixe 20 de la nacelle 14. Une partie amont 21 de l'obstacle 17 recouvre extérieurement une partie aval 22 de ladite structure fixe 20 de nacelle, tandis qu'une partie aval 23 de l'obstacle 17 est disposée dans le prolongement vers l'aval de ladite partie aval 22 de structure fixe de nacelle. Amont et aval sont définis par rapport au sens normal de circulation des gaz dans le turboréacteur, en fonctionnement de jet direct. La surface intérieure 24 de ladite partie aval 23 d'obstacle se raccorde à la surface intérieure 25 de ladite partie aval 22 de structure fixe de nacelle, délimitant ainsi extérieurement le canal secondaire 15 de circulation du flux froid secondaire, symbolisé par la flèche 26.

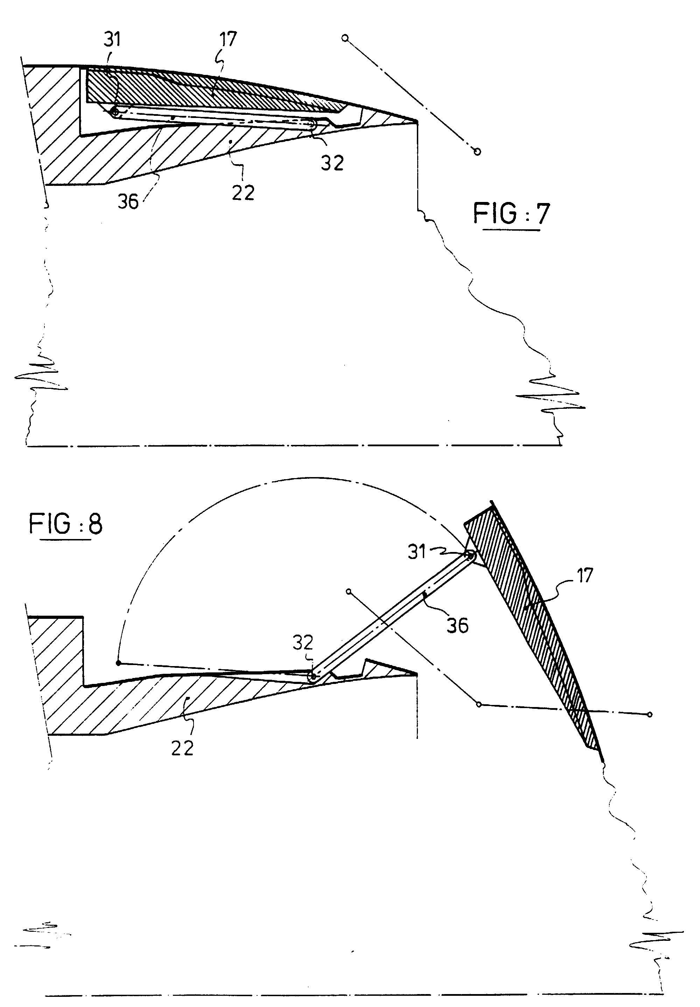

La fixation et le maintien de chaque obstacle 17 sont assurés de manière remarquable et conforme à l'invention au moyen d'une bielle aval 27 reliée à l'obstacle 17 par une articulation 28 et fixée d'une manière articulée au moyen d'une chape 29 sur la structure fixe interne 30 constituant l'enveloppe du corps primaire du turboréacteur 11. Deux autres bielles latérales amont 36 reliées à l'obstacle 17 par une articulation 31 et fixées de manière articulée en 32 sur la partie aval 22 de la structure fixe de nacelle concourent, comme cela est visible sur les figures 7 et 8, à la fixation, au maintien et au guidage lors de ses déplacements de l'obstacle 17. Suivant une variante de réalisation, deux bielles aval peuvent être utilisées. Un nombre de bielles supérieur à deux peuvent également être utilisées, soit en aval, soit en position latérale.
L'extrémité de la partie aval 22 de structure fixe de nacelle comporte un bord de déviation 33 dont la forme optimisée permet, comme représenté sur la demi-vue inférieure de la figure 5, d'assurer lors du fonctionnement en inversion de poussée un guidage optimisé du flux inversé et un pilotage des nappes de flux inversé. Les obstacles 17 peuvent également comporter des coins coupés tels que 34, 35 afin de permettre d'adapter le débit du flux inversé, notamment le rapport de la contre-poussée à la poussée résiduelle.

Suivant une variante de réalisation, l'adjonction d'un système à excentrique connu en soi sur l'articulation 29 d'attache de la bielle 27 sur l'enveloppe 30 de corps primaire permet, lors du fonctionnement en jet direct d'obtenir une variation de la section d'éjection déterminée par la surface intérieure 24 de la partie aval 23 des obstacles 17.

L'invention qui a été décrite suivant le mode de réalisation comportant quatre obstacles 17, en référence aux figures 3 à 8, est également applicable aux cas où l'inverseur de poussée comporte un nombre différent d'obstacles ou coquilles externes, par exemple un, deux ou trois ou plus de quatre.

D'autres variantes de réalisation de l'invention peuvent être envisagées en fonction des applications particulières. Notamment, la fixation, le maintien et le guidage des déplacements des obstacles 17 peuvent être assurés au moyen de deux bielles latérales aval par obstacle et d'une ou deux bielles disposées en amont. Suivant les applications et le mode de fonctionnement recherché, la disposition des bielles permet d'obtenir une position des obstacles équilibrée, auto-ouvrante ou auto-fermante selon la répartition des efforts. Un système de verrouillage connu en soi peut en outre être adjoint aux obstacles d'inverseur.

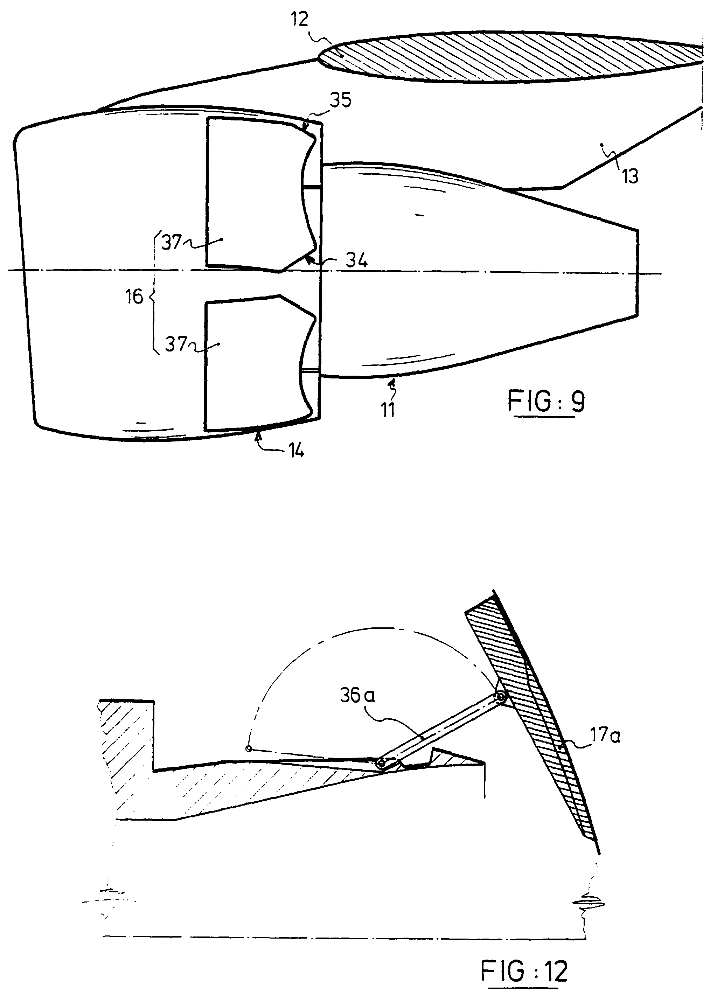

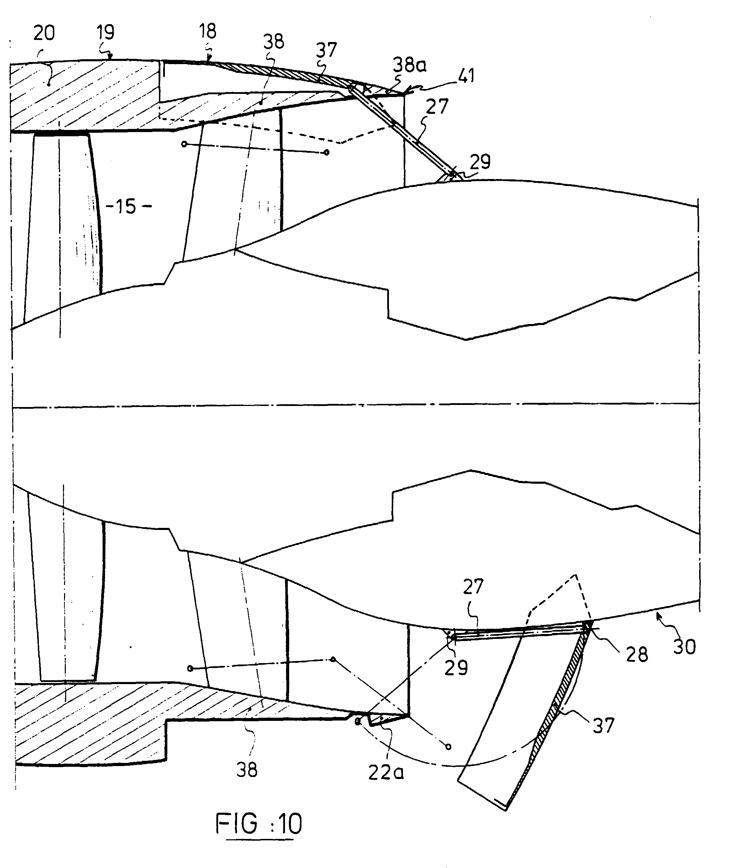

Les figures 9 et 10 montrent un second mode de réalisation d'un inverseur de poussée 16 conforme à l'invention et adapté à un turboréacteur 11 à double flux, monté comme précédemment au moyen d'un mât 13 sous l'aile 12 d'un avion. Comme cela apparaît sur la demi-vue supérieure de la figure 10, lors du fonctionnement en jet direct, la surface extérieure 18 de l'obstacle 37 est à nouveau dans le prolongement de la surface extérieure 19 de la structure fixe 20 de la nacelle 14. Par contre, suivant ce second mode de réalisation, la totalité de l'obstacle 37 est logée dans la structure annulaire externe du canal de flux secondaire et recouvre une partie interne 38 de la structure fixe. Ainsi, la surface extérieure annulaire de la partie aval du canal 15 de flux secondaire est constituée par la surface intérieure de la partie 38 de la structure fixe terminée du côté aval par une partie fixe en prolongement 38a. La partie 38a délimite, d'une part, du côté externe, la surface extérieure de nacelle, dans le prolongement, en jet direct, de la surface extérieure 18 de l'obstacle 37 et d'autre part, du côté interne, la surface extérieure de la partie aval du canal 15 du flux secondaire. L'extrémité 41 de la partie 38a constitue ainsi en jet direct un bord de fuite et lors du fonctionnement en inversion de poussée, tel que représenté sur la demi-vue inférieure de la figure 10, un bord de déviation délimitant un bord du puits d'inversion créé par l'obstacle 37. Les systèmes de commande des déplacements et de verrouillage d'obstacles 37 peuvent être conservés identiques à ceux qui ont été décrits dans le mode de réalisation représenté sur les figures 3 à 8 et notamment une bielle 27 et ses articulations 28 sur l'obstacle 37 et 29 sur l'enveloppe 30 du turboréacteur. Comme précédemment, les obstacles 37 peuvent comporter des coins coupés tels que 34, 35.

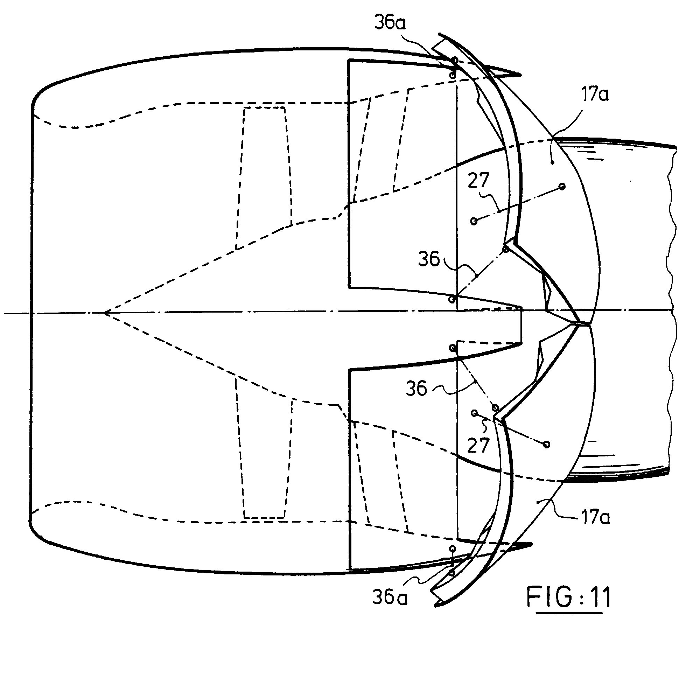

La figure 11 montre une variante de réalisation d'un inverseur de poussée conforme à l'invention, les obstacles 17a étant dans la position correspondant au fonctionnement en inversion de poussée. Comme précédemment décrit en référence aux figures 7 et 8, le maintien et le guidage des obstacles 17a sont assurés au moyen d'une bielle aval 27 et de deux bielles amont 36 et 36a. Comme cela est visible sur la figure 11 et sur la figure 12 qui montre une bielle 36a plus courte que la bielle 36 représentée sur la figure 8, les bielles amont sont de longueur différentes. Il en résulte une inclinaison latérale des obstacles 17a lors de l'inversion de poussée. Ainsi l'ajustement des positions des bielles et de leurs longueurs respectives grâce à l'inclinaison qui en résulte permet une amélioration du pilotage des nappes du flux inversé adapté à l'application particulière.

## Revendications

1. Inverseur de poussée de turboréacteur à double flux comportant des obstacles (17,37) capables, en position fermée de s'intégrer dans la paroi extérieure du canal annulaire du flux secondaire, et en position déployée de constituer des obstacles de déviation du flux secondaire procurant une inversion de poussée, lesdits obstacles (17,37) étant associés à des moyens de déplacement comportant des vérins, au moins une partie amont (21) de chaque obstacle (17) de l'inverseur (16), lors du fonctionnement de l'inverseur en jet direct, recouvrent une partie interne (22) d'une structure fixe (20) constituant la paroi extérieure du canal du flux secondaire (15) de manière que la surface extérieure (18) dudit obstacle (17) constitue une partie de surface extérieure de nacelle (14), dans le prolongement de la surface extérieure (19) de ladite structure fixe (20) caractérisé en ce que chaque obstacle (17) est associé à au moins une bielle amont (36) et à au moins une bielle aval (27), lesdites bielles assurant la fixation et le maintien de l'obstacle (17) ainsi que son guidage lors des déplacements d'obstacle et au moins une bielle aval (27) relie de manière articulée l'obstacle (17,37) à la structure fixe interne (30) constituant l'enveloppe du corps primaire du turboréacteur et au moins une bielle latérale amont (36) relie de manière articulée l'obstacle (17) à la partie aval (22) de la structure fixe (20) de nacelle.

2. Inverseur de poussée de turboréacteur selon la revendication 1 dans lequel ladite partie amont (21) de chaque obstacle (17) est prolongée par une partie aval (23) située, en jet direct, dans le prolongement de ladite structure fixe (22) de manière que la surface intérieure (25) de la partie aval (23) dudit obstacle (17) délimite extérieurement la partie aval du canal (15) de flux secondaire, lors du fonctionnement de l'inverseur en jet direct.

3. Inverseur de poussée de turboréacteur selon la revendication 1 dans lequel ladite partie interne (38) de structure fixe recouverte en jet direct par la totalité de dudit obstacle (37) est prolongée par une partie aval (38a) fixe délimitant, d'une part, du côté externe, la surface extérieure de nacelle, dans le prolongement, en jet direct de la surface extérieure de la obstacle et, d'autre part, du côté interne, la surface extérieure de la partie aval du canal (15) de flux secondaire, dans toutes les configurations de fonctionnement, de manière à constituer un bord de fuite (41) lors du fonctionnement en jet direct et un bord de déviation (41) délimitant un puits d'inversion lors du fonctionnement en inversion de poussée.

4. Inverseur de poussée de turboréacteur selon l'une quelconque des revendications 1 à 3 dans lequel les longueurs respectives et les positions desdites bielles (27, 36, 36a) sont déterminées de manière à ce que lors du fonctionnement en inversion de flux, les obstacles (17) sont latéralement inclinés, le bord amont latéral de chaque obstacle étant incliné par rapport à un plan perpendiculaire à l'axe du turboréacteur, permettant un pilotage des nappes du flux inversé.

## Patentansprüche

1. Schubumkehrvorrichtung für ein Zweikreistriebwerk mit Klappen (17, 37), die in der Lage sind, sich in geschlossener Stellung in die Außenwand des Mantelstrom-Ringkanals einzufügen und in ausgeklappter Stellung Umlenkklappen für den Mantelstrom zu bilden, wobei sie eine Schubumkehr bewirken, wobei die genannten Klappen (17, 37) mit Mitteln zum Verschieben verbunden sind, die aus Zylindern bestehen, wobei zumindest ein vorderer Teil (21) jeder Klappe (17) der Schubumkehrvorrichtung (16) beim Direktstrahlbetrieb der Schubumkehrvorrichtung einen inneren Teil (22) eines festen Aufbaus (20) überdeckt, der die Außenwand des Mantelstromkanals (15) bildet, so daß die Außenfläche (18) der genannten Klappe (17) in der Verlängerung der Außenfläche (19) des genannten festen Aufbaus (20) einen Teil der Außenfläche der Triebwerksgondel (14) bildet,
**dadurch gekennzeichnet, daß** jede Klappe (17) mit mindestens einer vorderen Stange (36) und mit mindestens einer hinteren Stange (27) verbunden ist, wobei diese Stangen die Befestigung und den Halt der Klappe (17) sowie ihre Führung bei den Klappenbewegungen gewährleisten, und daß mindestens eine hintere Stange (27) die Klappe (17, 37) gelenkig mit dem festen Innenaufbau (30) verbindet, der den Mantel des Hauptkörpers des Turbotriebwerks bildet, und eine vordere, seitliche Stange (36) die Klappe (17) gelenkig mit dem hinteren Teil (22) des festen Aufbaus (20) einer Gondel verbindet.

2. Schubumkehrvorrichtung für ein Turbotriebwerk nach Anspruch 1, wobei der genannte vordere Teil (21) jeder Klappe (17) durch einen hinteren Teil (23) verlängert wird, der sich im Direktstrahlbetrieb in der Verlängerung des genannten festen Aufbaus (22) befindet, so daß die Innenfläche (25) des hinteren Teils (23) dieser Klappe (17) den hinteren Teil des Mantelstromkanals (15) beim Direktstrahlbetrieb der Schubumkehrvorrichtung außen begrenzt.

3. Schubumkehrvorrichtung für ein Turbotriebwerk nach Anspruch 1, wobei der genannte innere Teil (38) des festen Aufbaus, der bei Direktstrahlbetrieb von der gesamten Klappe (37) überdeckt wird, durch einen feststehenden hinteren Teil (38a) verlängert wird, der einerseits außen die Gondelaußenfläche bei Direktstrahlbetrieb in Verlängerung der Außenfläche der Klappe abgrenzt, und andererseits innen die Außenfläche des hinteren Teils des Mantelstromkanals (15) in allen Betriebsstellungen abgrenzt, so daß er im Direktstrahlbetrieb eine Austrittskante (41) bildet und im Schubumkehrbetrieb eine Umlenkkante (41) bildet, die einen Umkehrraum begrenzt.

4. Schubumkehrvorrichtung für ein Turbotriebwerk nach einem der Ansprüche 1 bis 3, wobei die jeweiligen Längen und die Stellungen der genannten Stangen (27, 36, 36a) so bestimmt sind, daß die Klappen (17) bei Schubumkehrbetrieb seitlich geneigt sind, wobei die seitliche Vorderkante jeder Klappe zu einer Ebene geneigt ist, die senkrecht zur Achse des Turbotriebwerks verläuft, wodurch eine Regulierung der Flächen des Umkehrstroms möglich wird.

## Claims

1. Bypass jet engine thrust reverser comprising obstacles (17, 37) capable, in the closed position, of becoming incorporated into the outer wall of the annular bypass flow duct, and, in the deployed position, of constituting obstacles to deflect the bypass flow to provide a thrust-reversal effect, the said obstacles (17, 37) being associated with movement means comprising jacks, at least an upstream part (21) of each obstacle (17) of the reverser (16), when the reverser is operating in direct jet mode, covering an internal part (22) of a stationary structure (20) constituting the outer wall of the bypass flow duct (15) so that the outer surface (18) of the said obstacle (17) constitutes part of the outer pod surface (14) in the extension of the outer surface (19) of the said stationary structure (20), characterized in that each obstacle (17) is associated with at least one upstream link rod (36) and with at least one downstream link rod (27), the said link rods securing and holding the obstacle (17) and guiding it when the obstacle moves and at least one downstream link rod (27) connects the obstacle (17, 37) in an articulated manner to the internal stationary structure (30), that constitutes the outer casing of the primary spool of the jet engine and at least one upstream lateral link rod (36) connects the obstacle (17) in an articulated manner to the downstream part (22) of the stationary pod structure (20).

2. Jet engine thrust reverser according to Claim 1, in which the said upstream part (21) of each obstacle (17) is extended by a downstream part (23) which, in direct jet mode, lies in the extension of the said stationary structure (22) so that the inner surface (25) of the downstream part (23) of the said obstacle (17) externally delimits the downstream part of the bypass flow duct (15) when the reverser is operating in direct jet mode.

3. Jet engine thrust reverser according to Claim 1, in which the said internal part (38) of the stationary structure covered in direct jet mode by all of the said obstacle (37) is extended by a stationary downstream part (38a) delimiting, on the one hand, on the external side, the outer pod surface which, in direct jet mode, is in the extension of the outer surface of the obstacle and, on the other hand, on the internal side, the outer surface of the downstream part of the bypass flow duct (15), in all operating configurations, so as to constitute a trailing edge (41) when operating in direct jet mode and a deflecting edge (41) delimiting a reverser well when operating in thrust-reversal mode.

4. Jet engine thrust reverser according to any one of Claims 1 to 3, in which the respective lengths and positions of the said link rods (27, 36, 36a) are determined such that when operating in reverse-flow mode, the obstacles (17) are laterally inclined, the lateral upstream edge of each obstacle being inclined with respect to a plane perpendicular to the axis of the jet engine, allowing the layers of the reversed flow to be controlled.
